Europäisches Patentamt

European Patent Office

Office européen des brevets

(11) Veröffentlichungsnummer: **0 012 368**
**B1**

(12) **EUROPÄISCHE PATENTSCHRIFT**

(45) Veröffentlichungstag der Patentschrift:
**23.06.82**

(21) Anmeldenummer: **79104958.8**

(22) Anmeldetag: **06.12.79**

(51) Int. Cl.$^3$: **C 08 F 210/02**, C 08 F 2/34

(54) Verfahren zur Herstellung von Copolymerisaten des Äthylens.

(30) Priorität: **15.12.78 DE 2854151**

(43) Veröffentlichungstag der Anmeldung:
**25.06.80 Patentblatt 80/13**

(45) Bekanntmachung des Hinweises auf die Patenterteilung:
**23.06.82 Patentblatt 82/25**

(84) Benannte Vertragsstaaten:
**AT BE DE FR GB NL**

(56) Entgegenhaltungen:
**DE-A-1 445 229**
**FR-A-2 313 405**
**US-A-3 988 509**

(73) Patentinhaber: **BASF Aktiengesellschaft,
Carl-Bosch-Strasse 38, D-6700 Ludwigshafen (DE)**

(72) Erfinder: **Pfleger, Klaus, Dr., Ottostrasse 6,
D-5047 Wesseling (DE)**
Erfinder: **Zacher, Wieland, Dr., Lauenburger Strasse 2,
D-5047 Wesseling (DE)**
Erfinder: **Boettcher, Klaus, Dr., Hubertusstrasse 57,
D-5047 Wesseling (DE)**
Erfinder: **Skorczyk, Ronald, Chem.-Ing.,
Langemarckstrasse 38, D-5300 Bonn (DE)**
Erfinder: **Buechner, Oskar, Dr., Sickingenstrasse 4,
D-6724 Dudenhofen (DE)**
Erfinder: **Mietzner, Franz Georg Dr., Neuhausener
Weg 3, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**0 012 368**

## Verfahren zur Herstellung von Copolymerisaten des Äthylens

Die Erfindung betrifft ein Verfahren zur kontinuierlichen Herstellung von Äthylencopolymerisaten.

Bei diesem Verfahren werden Äthylencopolymerisate erhalten durch stufenweises Komprimieren eines Gemisches aus Äthylen und mit Äthylen copolymerisierbaren Comonomeren in einem Vorverdichter und einem Nachverdichter und Copolymerisation des Gemisches in einer Polymerisationszone bei Drücken von 1500 bis 5000 bar und Temperaturen von 150 bis 350° C in Gegenwart von Radikale bildenden Polymerisationsinitiatoren, Überführen des gebildeten Reaktionsgemischs in eine Hochdruckprodukttrennzone, in der ein Druck zwischen 100 und 500 bar und eine Temperatur zwischen 150 und 250° C herrscht, in eine nachfolgend angeordnete Niederdruckprodukttrennzone, in der ein Druck zwischen 1 und 10 bar und eine Temperatur zwischen 150 und 250° C herrscht, in einen Austragsextruder und Rückführung der Hauptmenge der nicht umgesetzten Gasmenge aus Äthylen und Comonomeren aus der Hochdruck- und der Niederdruckprodukttrennzone in den Polymerisationsprozeß und eines geringen Teils der nicht umgesetzten Gasmenge in eine Tieftemperaturtrennzone.

Bei derartigen Verfahren sind Maßnahmen erforderlich, um die bei der Copolymerisation nicht umgesetzten Comonomeren aus den Äthylenrücklaufströmen vor der Rückführung in den Polymerisationsprozeß zur weiteren Polymerisation oder zu anderen Zwecken abzutrennen. Die Rückführung der nicht umgesetzten Gasmengen erfolgt dabei üblicherweise in zwei Äthylenrücklaufströmen, wobei der eine Strom aus der Hochdruckprodukttrennzone (Hochdruckproduktabscheider) stammt und Hochdruckkreisgas, der andere aus der Niederdruckprodukttrennzone (Niederdruckproduktabscheider) kommt und Niederdruckkreisgas genannt wird. Die Kreisgasführung bei der Hochdruckpolymerisation von Äthylen ist allgemein bekannt und beispielsweise in der US-PS 3 117 953, »Ullmanns Encyclopädie der technischen Chemie«, Verlag Urban & Schwarzenberg, München, Berlin, 1963, 3. Auflage, Band 14, Seiten 139 bis 145 und im »Kunststoffhandbuch«, Verlag Carl Hanser, München 1969, Band IV, Seiten 39 bis 52, beschrieben.

Nach den bekannten Verfahren wird die Abtrennung der nicht umgesetzten Comonomeren aus dem Kreisgas der Anlage dadurch erreicht, daß man einen Teil oder die gesamte Gasmenge des bei Drücken von 100 bis 500 bar betriebenen Hochdruckkreises entspannt. Bei dieser Entspannung kühlt sich das Gasgemisch auf Temperaturen unterhalb 0° C ab, wobei sich dem Dampfdruck entsprechend die betreffenden Comonomeren mehr oder weniger vollständig abscheiden. Die Gasmenge des im Hochdruckkreis befindlichen Gasgemischs wird ganz oder zum größten Teil in die sogenannte Tieftemperaturtrennzone (Tieftemperaturabscheider) entspannt. In diese Tieftemperaturtrennzone wird auch die gesamte, aus der Niederdruckprodukttrennzone kommende Schubgasmenge eingeleitet. Die Tieftemperaturtrennzonen sind an sich wohlbekannt und beispielsweise in DE-PS 9 549 921, DE-PS 1 445 229 und US-PS 3 336 281 beschrieben.

Die bekannten, nach dem geschilderten Prinzip arbeitenden Verfahren haben den Nachteil, daß die Abscheidung der nicht umgesetzten Comonomeranteile im Tieftemperaturabscheider bei relativ niedrigen Drücken ausgeführt werden muß und deshalb nur unbefriedigend gelingt. Bei den herkömmlichen Verfahren kann der Druck im Niederdruckproduktabscheider nicht über 5 bar gehalten werden, da sonst zuviel Gas mit der Polymerenschmelze in den Extruder gelangt und es zu Störungen bei der Konfektionierung des Copolymerisates kommt. Die Gasbeladung der Produktschmelze bzw. des granulierten Produktes steigt im allgemeinen mit steigendem Druck im Niederdruckproduktabscheider beträchtlich an. Das in der vorliegenden Polymerenschmelze enthaltene Äthylen muß in Entgasungsextrudern entfernt werden, was nich ohne größeren Aufwand möglich ist; setzt man keine Entgasungsextruder ein, dann kann die Entgasung des äthylenhaltigen Granulates auch durch Belüften des Produktes mit Luft oder Stickstoff in Silos vorgenommen werden, wobei eine erhebliche Äthylenmenge in die Atmosphäre abgegeben wird.

Der vorliegenden Erfindung lag die Aufgabe zugrunde, das eingangs beschriebene Verfahren so abzuwandeln, daß eine verbesserte Abscheidung der im Polymerisationsprozeß nicht umgesetzten Comonomeren erreicht wird, wobei nur noch geringe Mengen an Comonomerenanteil im Abgas verbleiben und wobei das aus der Niederdruckprodukttrennzone kommende granulierte Copolymerisat nur noch eine geringe Gasbeladung aufweist.

Die Aufgabe wird erfindungsgemäß dadurch gelöst, daß nur ein geringer Teil der aus der Hochdruckprodukttrennzone rückgeführten Gasmenge in die Tieftemperaturtrennzone eingeleitet und die aus der Niederdruckprodukttrennzone abgezogene Gasmenge restlos direkt dem Vorverdichter zugeführt wird.

Bevorzugt wird das in die Tieftemperaturtrennzone eingeleitete Gas bei einem Druck von 10 bis 30 bar und bei einer Temperatur von −10 bis −50° C gehalten.

Unter Äthylencopolymerisaten werden die Copolymerisate des Äthylens verstanden, die bei den angegebenen Temperatur- und Druckverhältnissen herstellbar sind. Der Ausdruck Äthylencopolymerisate umfaßt Copolymerisate, die bis zu 50 Gewichtsprozent Comonomere einpolymerisiert enthalten und die einen Schmelzindex von 0,1 bis 150 g/10 min, bestimmt nach ASTM-D-1238 65 T bei einer Temperatur von 190° C und einem Auflagegewicht von 2,16 kg, und eine Dichte von 0,890 bis

0,934 d/cm$^3$, gemessen nach DIN 53 479, aufweisen.

Unter Copolymerisation von Äthylen versteht man die bei Drücken von 1500 bis 5000 bar und Temperaturen von 150 bis 350°C herstellbaren Äthylencopolymerisate. Dabei können sämtliche Polymerisationsinitiatoren und Kettenübertragungsmittel, die für die Copolymerisation des Äthylens unter hohem Druck bekannt sind, im Rahmen des Verfahrens eingesetzt werden.

Als mit Äthylen copolymerisierbare Comonomere kommen sämtliche mit Äthylen bei den angegebenen Temperaturen und Druckverhältnissen copolymerisierbare Verbindungen in Betracht. Solche Comonomere sind z. B. Vinylester von C$_2$- bis C$_4$-Alkancarbonsäuren wie Vinylacetat oder Vinylpropionat; C$_2$- bis C$_4$-Alkylester einer C$_3$- bis C$_4$-Alkencarbonsäure wie Acrylsäure -n- oder -tert.-butylester; Acrylnitril; Acrylamid; C$_2$- bis C$_4$-Alkencarbonsäuren wie Acrylsäure oder Vinyläther, die sich von Alkenen mit 3 bis 8 C-Atomen ableiten. Als Initiatoren verwendet man zweckmäßig Sauerstoff, Peroxide wie Benzoylperoxid oder auch Azoverbindungen, wie Azo- bis-isobutyronitril.

Bevor das Gemisch aus Äthylen und Comonomeren in die Polymerisationszone gelangt, wird es in einem Vorverdichter auf 250 bis 350 bar komprimiert und anschließend in einem Nachverdichter auf Polymerisationsdruck gebracht. Für diese mehrstufige Kompression auf den gewünschten Polymerisationsdruck werden üblicherweise zwei hintereinandergeschaltete Aggregate verwendet, wie sie in »Ullmanns Encyklopädie der technischen Chemie« (1963), Bd. 14, Seite 140 bis 141, Verlag Urban & Schwarzenberg, München, Berlin, beschrieben sind.

Das Verfahren läßt sich unter Anwendung der üblichen kontinuierlich betriebenen Hochdruckpolymerisationssysteme ausführen. Unter Polymerisationszonen werden die üblichen Rohrreaktoren und Rührautoklaven verstanden. Unter Rohrreaktoren versteht man rohrförmige Polymerisationsgefäße, deren Verhältnis Länge zum Durchmesser der druckfesten Rohre im Bereich 10 000 bis 60 000 zu 1 liegt. Autoklavenreaktoren sind druckfeste Behälter, deren Länge zu ihrem Durchmesser im Verhältnis von 30 : 1 bis 2,5 : 1 stehen. Um das Reaktionsgemisch gut durchmischen und damit die entstehende Wärme gut verteilen zu können, baut man Rührer in die Autoklaven ein. Angaben über Verfahren, bei denen Rohrreaktoren benutzt werden, finden sich beispielsweise in »Ullmanns Encyklopädie der technischen Chemie«, 1963, 3. Auflage, Band 14, Seiten 137 bis 148.

Im Anschluß an die Polymerisation wird das Reaktionsgemisch in eine Hochdruckprodukttrennzone, auch Hochdruckproduktabscheider genannt, geleitet, in der ein Druck zwischen 100 und 500, bevorzugt 250 bis 350 bar und eine Temperatur zwischen 150 und 250°C herrscht. In diesem Hochdruckproduktabscheider wird das im Reaktor erhaltene Äthylencopolymerisat von nicht polymerisierten Monomeren abgetrennt. Aus dem Hochdruckproduktabscheider wird das Copolymerisat in die Niederdruckprodukttrennzone, auch Niederdruckproduktabscheider genannt, geführt. Nach dem erfindungsgemäßen Verfahren wird die Hauptmenge des nicht umgesetzten Gasgemisches aus Äthylen und Comonomeren aus der Hochdrucktrennzone nach Passieren des Nachverdichters, wo es wieder auf Reaktionsdruck aufkomprimiert wird, in die Polymerisationszone eingeleitet, während eine Teilmenge von 0,5–10 Gewichtsprozent, bevorzugt 1–3 Gewichtsprozent, der aus der Hochdrucktrennzone zurückgeführten Gasmenge in die Tieftemperaturtrennzone eingeleitet wird.

Nach erfindungsgemäßen Verfahren wird die aus der Niederdrucktrennzone abgezogene Gasmenge, bestehend aus Äthylen und Comonomeren, restlos dem Vorverdichter zugeführt und zur weiteren Polymerisation verwendet. Durch diese Maßnahmen kann der Druck im Niederdruckabscheider möglichst niedrig gehalten werden, bevorzugt bei 1 bis 1,5 bar. Es besteht keine Verbindung zwischen den Gasrücklaufströmen des Hochdruck- und Niederdruckkreises.

Vom Niederdruckproduktabscheider wird das erhaltene Copolymerisat in bekannter Weise in einen Austragsextruder geführt und konfektioniert.

Das aus der Hochdrucktrennzone in die Tieftemperaturzone eingeleitete Gasgemisch wird erfindungsgemäß bei einem Druck von 10 bis 30 bar und bei einer Temperatur von −10 bis −50°C gehalten.

Das erfindungsgemäße Verfahren hat den Vorteil, daß die Gasbeladung des granulierten Produktes durch die ermöglichte Druckerniedrigung im Niederdruckproduktabscheider vermindert wird. Dies führt zu einer wesentlichen Reduktion der Äthylenemission. Im Abgas, das ausschließlich dem Hochdruckkreis entstammt und über den Tieftemperaturabscheider gefahren wird, verbleiben nur noch sehr geringe Mengen an Comonomerenanteilen.

In den folgenden Beispielen wird das erfindungsgemäße Verfahren näher beschrieben.

## Beispiel

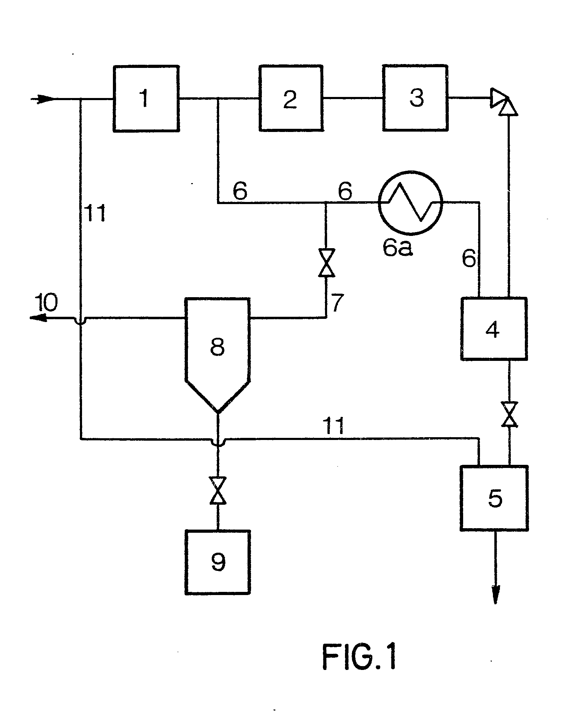

Das erfindungsgemäße Verfahren wird anhand der Figur 1 im Anhang beschrieben:

Einem Rohrreaktor (3) wird pro Stunde ein in Vorverdichter (1) und Nachverdichter (2) stufenweise auf 2100 bar komprimiertes Gemisch zugeführt, das aus 9460 kg Äthylen, 1415 kg Vinylacetat und 15 Mol Sauerstoff je eine Million Mole Äthylen besteht. Das Reaktionsgemisch erreicht in der Reaktionszone (3) eine Spitzentemperatur von 305°C, die freiwerdende Reaktionswärme wird mit Druckwasser abgeführt. Vom Reaktor (3) aus gelangt das Reaktionsgemisch in den Hochdruckproduktabscheider (4), in dem ein Druck von 300 bar und eine Temperatur von 220°C herrscht und von dort aus in den Niederdruckproduktabscheider (5), der bei einem Druck von 1,5 bar und bei einer Temperatur von 210°C betrieben wird. Man erhält pro Stunde 1780 kg eines homogenen Äthylencopolymerisates der Dichte 0,345 g/cm$^3$ und des Schmelzindex 4,15 g/10 min, das 13,8 Gewichtsprozent Vinylacetat einpolymerisiert enthält.

Vom Hochdruckkreis (6) werden 120 kg Gas über eine Verbindungsleitung (7) in den Tieftemperaturabscheider (8) entspannt; die Hauptmenge (8 715 kg) aus dem Hochdruckproduktabscheider (4) wird durch ein Kühlsystem (6a) über die Leitung (6) zum Nachverdichter (2) geführt. Die Abtrennung des im Reaktor (3) nicht umgesetzten Vinylacetates erfolgt bei der Entspannung der Gasmenge von 120 kg aus dem bei 300 bar betriebenen Hochdruckkreis (6) im Tieftemperaturabscheider (8), der unter einem Druck von 20 bar gehalten wird. Bei einer Temperatur von −25°C scheiden sich 15,4 kg Vinylacetat pro Stunde im Abscheider (8) ab. Das abgeschiedene Comonomere wird kontinuierlich in einen Sammelabscheider (9) ausgetragen.

Das den Tieftemperaturabscheider (8) verlassende, von Vinylacetat weitgehend befreite Äthylen wird über die Leitung (10) als Abgas aus dem Prozeß abgeführt. Die pro Stunde abgeführten 104,6 kg Abgas enthalten 0,14 kg Vinylacetat; dies entspricht einem Vinylacetatgehalt des Abgases von 0,13 Gewichtsprozent.

Die gesamte Schubgasmenge, die 380 kg pro Stunde beträgt und aus dem Niederdruckproduktabscheider (5) kommt, wird über die Leitung (11) restlos dem Vorverdichter (1) zugeführt.

## Vergleichsbeispiel

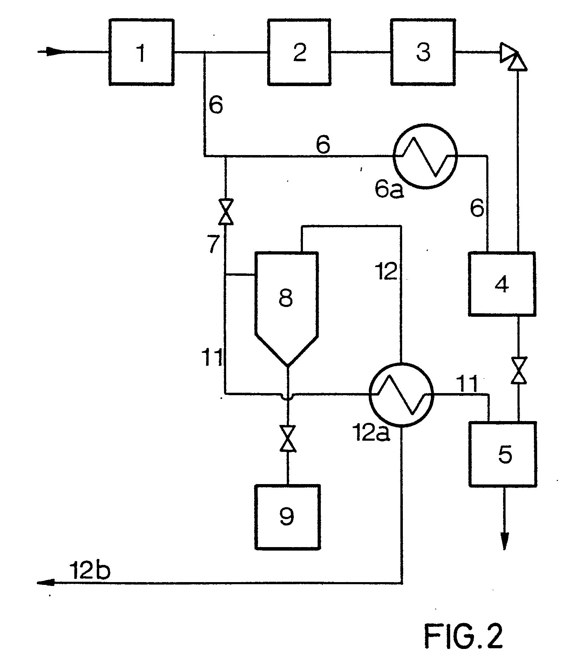

Das Verfahren gemäß dem Stand der Technik wird anhand der Figur 2 im Anhang beschrieben:

Wie im Beispiel gemäß Erfindung wird einem Rohrreaktor (3) ein im Vorverdichter (1) und Nachverdichter (2) stufenweise auf 2100 bar komprimiertes Gemisch aus 9460 kg Äthylen 1415 kg Vinylacetat und 15 Mol Sauerstoff je eine Million Mole Äthylen zugeführt. Die Bedingungen im Reaktor (3) Hochdruckproduktabscheider (4) stimmen mit denen im erfindungsgemäßen Beispiel genannten überein.

Im Niederdruckproduktabscheider (5) beträgt die Temperatur 210°C, und es herrscht ein Druck von 4 bar. Man erhält 1,780 kg eines homogenen Äthylencopolymerisats der Dichte 0,9345 g/cm$^3$ und des Schmelzindex 5,15 g/10 min, das 13,5 Gewichtsprozent Vinylacetat einpolymerisiert enthält.

Die Abtrennung des im Reaktor (4) nicht umgesetzten Vinylacetats wird derart durchgeführt, daß nach Passieren des Kühlsystems (6a) eine Teilmenge von 1,134 kg des im Hochdruckkreis (6) bei 300 bar gefahrenen Gasgemisches über die Leitung (7) in den Tieftemperaturabscheider (8) entspannt wird, während die restliche Menge des Kreisgases im Hochdruckkreis (6) bleibt und zum Nachverdichter (2) geführt wird. In den Tieftemperaturabscheider (8) wird die gesamte Schubgasmenge von 380 kg aus dem Niederdruckproduktabscheider (5) durch die Leitung (11) nach Passieren des Kühlsystems (12a) ebenfalls eingeleitet. Die bei einem Druck von 3 bar und einer Temperatur von −25°C in diesem Tieftemperaturscheider (11) anfallende Vinylacetatmenge beträgt 183,8 kg. Das den Tieftemperaturabscheider (8) verlassende Äthylen enthält noch 9,24 kg Vinylacetat und muß als Abgas durch die Leitung (12/12b) aus dem Prozeß abgeführt werden; das entspricht einem Vinylacetatgehalt des Abgases von 0,7 Gewichtsprozent. Das im Tieftemperaturabscheider (8) anfallende Vinylacetat kann ohne vorherige Reinigung nicht wieder in den Copolymerisationsprozeß eingesetzt werden, da es zu stark verunreinigt ist. Es müssen 443,34 kg frisches Vinylacetat in den Prozeß eingegeben werden. Die Mengenangaben beziehen sich jeweils auf den Zeitraum von 1 Stunde.

Gegenüberstellung

|  | Abgeschiedene VAc-Menge | Im Abgas enthaltene VAc-Menge | Im frisch granuliertem Copolymerisat enthaltenes Äthylen |
| --- | --- | --- | --- |
| Beispiel gemäß Erfindung | 15,4 kg/h | 0,14 kg/h | 580 cm$^3$/kg |
| Vergleichsbeispiel | 193,8 kg/h | 9,24 kg/h | 1650 cm$^3$/kg |

VAc = Vinylacetat

Die Mengenangaben für VAc beziehen sich auf den Zeitraum von 1 Stunde.

**0 012 368**

## Patentansprüche

1. Verfahren zur kontinuierlichen Herstellung von Äthylencopolymerisaten durch stufenweises Komprimieren eines Gemisches aus Äthylen und mit Äthylen copolymerisierbaren Comonomeren in einem Vorverdichter und einem Nachverdichter und Copolymerisation des Gemisches in einer Polymerisationszone bei Drücken von 1500 bis 5000 bar und Temperaturen von 150 bis 350°C in Gegenwart Radikale bildender Polymerisationsinitiatoren, Überführen des gebildeten Reaktionsgemisches in eine Hochdruckprodukttrennzone, in der ein Druck zwischen 100 und 500 bar und eine Temperatur zwischen 150 und 300°C herrscht, in eine nachfolgend angeordnete Niederdruckprodukttrennzone, in der ein Druck zwischen 1 bis 10 bar und eine Temperatur zwischen 150 und 250°C herrscht, in einen Austragsextruder und Rückführung der Hauptmenge der nicht umgesetzten Gasmengen aus Äthylen und Comonomeren aus der Hochdruckprodukt- und Niederdruckprodukttrennzone in den Polymerisationsprozeß, und eines geringen Teils der nicht umgesetzten Gasmenge in eine Tieftemperaturtrennzone, dadurch gekennzeichnet, daß ein geringer Teil der aus der Hochdruckprodukttrennzone rückgeführten Gasmenge in die Tieftemperaturtrennzone eingeleitet und die aus der Niederdruckprodukttrennzone abgezogene Gasmenge restlos direkt dem Vorverdichter zugeführt wird.

2. Verfahren nach Anspruch 1, dadurch gekennzeichnet, daß das in die Tieftemperaturtrennzone eingeleitete Gas bei einem Druck von 10 bis 30 bar und bei einer Temperatur von −10 bis −50°C gehalten wird.

## Claims

1. A process for the continuous production of ethylene copolymers by compressing a mixture of ethylene and a comonomer copolymerizable with ethylene stepwise in a pre-compressor and a post-compressor, copolymerizing the mixture in a polymerization zone under pressures of from 1,500 to 5,000 bar at from 150 to 350°C in the presence of a free radical polymerization initiator, transferring the resulting reaction mixture into a high-pressure product isolation zone which is under a pressure of from 100 to 500 bar and at from 150 to 250°C, then into a downstream low-pressure product isolation zone, which is under a pressure of from 1 to 10 bar and at from 150 to 250°C, and thereafter into a discharge extruder, and recyling the greater part of the unconverted gas, consisting of ethylene and comonomer, from the high-pressure product isolation zone and the low-pressure product isolation zone to the polymerization process, and a small part of the unconverted gas to a low-temperature isolation zone, characterized in that a small part of the gas recycled from the high-pressure product isolation zone is passed into the low-temperature isolation zone and all the gas taken off the low-pressure product isolation zone is fed direct to the pre-compressor.

2. A process as claimed in claim 1, characterized in that the gas passed into the low-temperature isolation zone is kept under a pressure of from 10 to 30 bar and at from −10 to −50°C.

## Revendications

1. Procédé de préparation continue de copolymères de l'éthylène par compression par étages successifs d'un mélange d'éthylène et de comonomères copolymérisables avec l'éthylène dans un pré-compresseur et un post-compresseur, copolymérisation du mélange dans une zone de polymérisation sous des pressions de 1.500 à 5.000 bars et à des températures de 150 à 350°C en présence d'initiateurs de polymérisation formant des radicaux et transferts successifs du mélange réactionnel formé dans une zone de séparation haute pression, dans laquelle sont maintenues une pression entre 100 et 500 bars et une température entre 150 et 300°C, puis dans une zone de séparation basse pression disposée en aval, dans laquelle sont maintenues une pression entre 1 et 10 bars et une température entre 150 et 250°C, et dans une boudineuse d'extrusion, la majeure partie de l'éthylène et des comonomères gazeux non transformés, provenant de la zone de séparation haute pression et de la zone de séparation basse pression, étant recyclée dans le processus de polymérisation et une fraction mineure des gaz n'ayant pas réagi étant amenée dans une zone de séparation à basse température, caractérisé en ce qu'une fraction mineure des produits gazeux provenant de la zone de séparation haute pression est amenée dans la zone de séparation à basse température et la totalité des produits gazeux soutirés de la zone de séparation basse pression est amenée directement dans le pré-compresseur.

2. Procédé suivant revendication 1, caractérisé en ce que le produit gazeux introduit dans la zone de séparation à basse température est maintenu sous une pression de 10 à 30 bars et à une température entre −10 et −50°C.

5

FIG.1

FIG.2